# EUROPEAN PATENT APPLICATION

(11) **EP 2 529 610 A1**
(43) Date of publication of application: **05.12.2012**
(21) Application number: 11004411.2
(22) Date of filing: 30.05.2011
(51) Int. Cl.: A01B 79/00, A01D 41/127

(54) **Method for harvest monitoring**

(71) Applicant: Agri-Esprit SAS, 67000 Strasbourg (FR)
(72) Inventor: Nadison, Jeffrey, 67000 Strasbourg (FR); Linke, Christian Wilfried, 68623 Lampertheim (DE)
(74) Representative: Jacobi, Markus Alexander

(57) **Abstract**

A method for monitoring the amount of product harvested by an agricultural machine (10) including harvesting equipment (16) is proposed, which comprises the steps of storing a predetermined yield map (45) in memory means accessible by a processing unit (30), continuously providing positional data and sensor data to the processing unit while the agricultural machine (10) is in operation, wherein the positional data comprises information on a location of the agricultural machine (10) and the sensor data comprises information on a state of the harvesting equipment (16), and calculating the amount of product harvested based on the positional data, the sensor data and the predetermined yield map.

## Description

The invention relates to a method for monitoring agricultural work, in particular for monitoring the amount of product harvested. The invention further concerns a computer program, a processing unit and an agricultural machine for performing the method.

### BACKGROUND

In modem agriculture, accuracy and efficiency in cultivating fields are essential factors for productivity and sustainability. Therefore, concepts such as precision agriculture have been developed to aid farmers in optimizing their farm management. Particularly, for large agricultural operations with a high number of employees and machines working on the fields, accurate record keeping, automated data capturing, and precision farming techniques have become crucial factors in the challenge to manage the work on the field efficiently and to ensure economic, social and environmental sustainability of the production.

For this purpose technologies such as satellite imagery, information technology and particularly positioning systems are used in order to control farming steps through all stages from preparing the soil for seeding to harvesting the ripened product. Such applications usually involve the use of sensors, global navigation satellite system (GNSS) or information management utilities such as geographic information systems (GIS).

The document US 5,754,137 describes a process for taking action on productive lands using a working vehicle. The process facilitates the positional data of a working vehicle during the operational action and processes the positional data further in a data processing device arranged to the working vehicle.

This way the path of the working vehicle transverse within the productive land is determined and continuously indicated visually by means of an output medium. This process is particularly being used within the context of soil treatment or the spreading of substances such as fertilizers. DE 43 42 171 A1 describes a system that provides real time control of fertilizer distribution, to identify errors in the distribution. A differential global positioning system uses a satellite to emit high frequency radio-waves that are received by a mobile station having a control computer. The transmission is also received by a stationary station for which the position is accurately known. Correction position data is determined for the mobile station. A vehicle used for spreading fertilizer in agricultural applications is accurately positioned using the data. The control computer has a stored map of the region in which different agricultural sectors are marked, each of which requires a different spreading density.

Another important aspect in farm management concerns the harvest control, since harvesting presents a particularly important stage of the cultivation process. Such harvest control allows for optimization of harvesting logistics, storage management, processing and packaging logistics and for adjustments of supply opposite demand, especially in perishable products. Thus, the precise knowledge of the amount of product harvested is vital. Depending on the equipment used for harvesting different methods for yield monitoring based on physical throughput parameters of the harvesting equipment are known and particularly established in grain and forage harvesters.

However, measuring material throughput of a harvester with most other farm commodities, such as vegetables, with sufficient precision and reliability are difficult. While grain combine harvesters and some other harvesters, e.g. forage harvester, can be equipped with yield monitoring systems, e.g. devices which measure the amount of crop harvested over time, for most specialty harvesters (e.g. vegetable, potato) such systems are either not available or not reliable enough. Furthermore, the large variation of size, shape, density and sensitivity of the various crops requires very specific designs for each yield monitoring system. Additionally, other material such as soil or other plant parts (leaves) moved through the harvester together with the product create additional challenges for designing a material throughput measurement device on a harvester.

As an alternative to harvest monitoring using physical parameters, DE-A 199 58 318 describes a device for determining the crop yield for root crop. There a sensor located on the harvesting equipment detects the drive torque of a conveyor section, whose conveying direction exhibits a vertical component.

This system provides continuous yield monitoring, which is stored in combination with GPS data. However, the accuracy of this method can be tampered by other material such as soil or other plants. Additionally, parameters such as material transport time within the machine or friction between components hamper accuracy. Furthermore, a sloping position of the machine or oil temperature of the elevator drive can cause measurement errors. Thus, the measurements rely on parameters which are hard to control.

### OBJECT OF THE INVENTION

It is an object of the present invention to provide a method for precisely monitoring the amount of product harvested. It is a further object of the present invention to increase the flexibility allowing for monitoring amount of product harvested independent of physical throughput parameters.

### DESCRIPTION OF THE INVENTION

According to the invention a method for monitoring the amount of product harvested by at least one agricultural machine including a harvesting equipment is proposed, which comprises the steps of storing a predetermined yield map in memory means accessible by a processing unit, continuously providing positional data and sensor data to the processing unit while the agricultural machine is in operation, wherein the positional data comprises information on a location of the agricultural machine and the sensor data comprises information on a state of the equipment of the agricultural machine, and calculating the amount of product harvested based on the positional data, the sensor data and the predetermined yield map.

Overall, the present invention provides a simple and flexible method for precise monitoring of the amount of product harvested in real time. Additionally, the method according to the present invention is independent of physical throughput parameters and may be applied to any type of crop or harvesting equipment. Real time harvest monitoring according to the present invention thus allows building up a detailed data base which aids farmers to optimize productivity. Particularly, an increase in efficiency and sustainability of the production can be achieved.

In the sense of the present invention the product harvested is any type of crop, which is grown to be harvested particularly as food, livestock fodder, fuel or for any other economic purpose. Crops refer to plants such as maize (corn), wheat, rice, soybeans, hay, potatoes and cotton or include other biological kingdoms such as mushrooms, which are in the fungi kingdom.

An agricultural machine in the context of the present invention refers to any type of machinery including harvesting equipment. Such an agricultural machine typically comprises a mobile or semi-mobile part and harvesting equipment for gathering the crop. Typically the harvesting equipment is self-propelled, where the mobile or semi-mobile part is combined with the harvesting equipment. Alternatively, the harvesting equipment is arranged at the mobile or semi-mobile unit separately, e.g. for towing by a tractor. Examples for harvesting equipment are reapers used for cutting cereal grains, mechanical com pickers for harvesting com or maize, root crop harvesting equipment digging for roots and forage harvesters used to cut and chop of crops.

Yield maps usually include information on one or more biophysical parameters connected to the crop yield at locations on a predetermined field or in a predetermined field plot or patch. In one embodiment of the invention the predetermined yield map is created by field sampling and/or remote sensing. Such yield maps comprise for example historic yield maps, biomass maps, soil maps, soil moisture maps, field images such as infrared, visible or ultraviolet contour maps or a combination of two or more of those.

In the course of field sampling different parameters are determined in random locations across a desired field. Such parameter determination includes for example weighing the biomass, measuring the Chlorophyll content or weighing the fruit. Typically, the results of the sampled field location are registered on a map and optionally the randomly distributed results are interpolated in order to create a full yield map of the desired field.

In remote sensing, parameters like the temperature can be detected through e.g. wireless sensor networks, where sensors are comprised in an elevated location over the field, such as mast, or on planes, mobile machines or satellites. Additionally or alternatively, remote sensing may be employed to acquire multispectral imagery for deriving maps of crop biophysical parameters. Using remote sensing data various indices such as the vegetation condition index (VCI), thermal condition index (TCI) or the normalized difference vegetation index (NDVI) are mapped out for a field or in a predetermined field plot or patch. VCI and TCI typically aid the assessment of weather impacts on vegetation and evaluation of vegetation health and productivity. The NDVI is a simple numerical indicator of the vegetation greenness and stands for the spectral reflectance measurements acquired in the visible (wavelength about 400 to 700 nm) and near infrared (wavelength about 700 to 1300 nm) region. The creation of yield maps based on remote data sensing is described in US 2005/0234691, JP-A 2010 0166851 and CN-A 101595812.

In another embodiment of the invention, the memory means for storing the predetermined yield map is portable or semi portable. Portable memory means are realized as for example compact disc (CD), digital video disc (DVD), flash memory disk, read only memory (ROM) and a universal serial bus (USB) stick. Semi-portable memory means are implemented as for example a hard disk drive or a solid state drive, which are preferably assigned to the processing unit.

The processing unit is preferably part of a programmable machine (e.g. a computer) to sequentially and automatically carry out a sequence of arithmetic or logical operations. Depending on the location of the processing unit, the signal flow can follow a centralized or a decentralize scheme. In a centralized scheme, the processing unit is assigned to an remote station such as an office or another central point, where data from one or more agricultural machines can be gathered and monitored. A centralized scheme provides a simple and cost effective solution, since less hardware is necessary. In a decentralized scheme the processing unit is assigned to the agricultural machine, preferably the mobile or semi mobile part. In another embodiment of the decentralized scheme, the processing unit is part of a portable computing device such as a personal digital assistant (PDA), a laptop computer or a smart phone carried by the operator of the agricultural machine or anyone monitoring the field work. A decentralized scheme provides a simple and direct way for the operator to monitor and control the amount of product harvested while working. Furthermore, any problems concerning network reception can be avoided.

In one aspect of the invention the positional data is provided to the processing unit by a positioning system that determines the location of the agricultural machine. Such a system is preferably satellite based and/or terrestrial. With the aid of the positional data the position of the agricultural machine can further be checked in accordance with the locations included in the yield map. This way it can be determined, whether the agricultural machine resides on a predetermined field or in a predetermined field patch or plot.

A satellite based positioning system usually provides the global coordinates of the agricultural machine and can be implemented as global navigation satellite system (GNSS) situated on the agricultural machine.

A GNSS provides positioning as well as navigation with global coverage and realizations of such a GNSS are for example a global positioning system (GPS), a differential global positioning system (DGPS) or a Galileo system. Such satellite based positioning systems are well known in the art, see e.g. US 5,754,137.

Alternatively, the positional data is provided terrestrially via mobile positioning, which includes a location based service that discloses the actual coordinates of a mobile transceiver, such as a mobile phone, assigned to the agricultural machine. Another possibility to provide positional data terrestrially is to simply use a reference point fixed with respect to the field and to continuously determine the relative location of the agricultural machine through the distance and angle of the agricultural machine to the reference point by using e.g. laser beams. Further options to realize the positioning system are gyroscopic systems, radiogoniometric systems, odometric systems, accelerometric, light or laser beam based positioning.

In yet another implementation, the positioning system includes a combination of one or more of the aforementioned satellite based or terrestrial systems in order to enhance accuracy. In another aspect of the invention, the positional data includes the locations of the agricultural machine and associated time stamps. Hence, a time stamps is associated to the locations of the machine represented by the coordinates of the machine's position. This way the length of the path harvested by the agricultural machine can be determined for any desired time span or location.

In one embodiment, the sensor data is provided to the processing unit by one or more sensors situated on the agricultural machine, preferably on the harvesting equipment. The sensor data comprises information on a state of the equipment of the agricultural machine, which particularly includes whether the equipment is active, i.e. engaged and/or running, and whether product is flowing through the equipment. This information is retrieved by facilitating one or more sensor(s) measuring equipment related parameters. Such sensor(s) comprise mechanical sensors, ultrasonic sensors, light transmission or light reflection including color changes, radiation, electromagnetic waves, electrical means (e.g. resistance, dielectricity, eddy current), magnetism or any combination of those. The corresponding equipment related parameters comprise force, stress (strain gauges), torque, acceleration, movement including oscillation, vibration, electric current, voltage, (electric) power consumption, flowmeters (liquids, gas) or material flow / material layer.

In one implementation, the positioning system and the one or more sensor(s) communicate with the processing unit via bi-directional, real time telematics. In this context real time telematics allow for continuously sending, receiving and storing information, particularly positioning data, via telecommunication devices in conjunction with e.g. electronic mapping. The positional data and the sensor data may be provided to the processing unit via a wired or wireless connection. If the processing unit is situated at an remote station, the positioning system and the one or more sensor(s) situated at the machine preferably communicate with the processing unit via a wireless network interface providing data from the machine to the processing unit. Herein a wireless network interface refers to any device using a wireless communication protocol for exchanging data. If the processing unit is situated at the machine, the connection to the positioning system and the one or more sensor(s) may be realized directly through a wired connection or alternatively through a wireless network interface.

Based on the positional data, the sensor data and the predetermined yield map, the amount of product harvested can be calculated by the processing unit. In particular, the amount of product harvested is calculated on basis of the length of the path harvested as determined from the positional data, the yield map and the working width of the machine. The information on the working width may be predetermined in the memory means or entered by a user prior to starting the harvesting operation. Additionally or alternatively, a method may be employed where the path harvested is stored and the working width is calculated on the basis of stored information. This is particularly useful when the crop to be harvested does not reach across the full working width of the equipment.

In one embodiment, before calculating the amount of product harvested the processing unit checks whether the sensor data indicates the equipment is active and product is flowing. In another embodiment, the processing unit additionally checks whether the positional data indicates that the machine is located in a predetermined field plot, wherein the predetermined field plot is either stored separately in the memory means or preferably derived from the predetermined yield map.

The information on the amount of product harvested is preferably calculated in real time with respect to the location of the machine. Optionally, the information on the amount of product harvested is summed in order to provide the total amount of product harvested while the agricultural machine is in operation. Furthermore, the total amount harvested can be divided into sub-totals referring to e.g. each kind of crop harvested, each field work was performed on and/or each machine or operator performing the work. Such data analysis allows building up a detailed data base which aids farm management such as the optimization of harvesting logistics, storage management and processing.

In one implementation, the information on the amount of product harvested is provided to an output medium, stored in memory means or transferred to an remote station. In one embodiment, the information on the amount and/or the (sub)-total amount of product harvested is displayed with reference to the location of the agricultural machine. One option is to display the information on the amount of product harvested or any information derived therefrom on a screen or display as output medium. The screen or display is preferably arranged on the agricultural machine such that the operator can follow the harvesting process in real time. Alternatively or additionally, the screen or the display is arranged at a remote station such that a supervisor or anyone involved in monitoring the farm work is informed about the work going on. Another option is to utilize a speaker as output medium in order to provide the information on the amount of product harvested or any information derived therefrom as acoustic information to e.g. the machine operator. Yet another option is to transfer the calculated amount of product harvested or any parameter derived therefrom to a mobile device such as a mobile phone or laptop. In a further embodiment, the information on the amount of product harvested or any information derived therefrom is transferred and stored in memory means that can be either portable or located on the machine or in the remote station.

In another implementation of the method according to the invention, all the data used in the context of the present invention is organized in a geographic information system (GIS) for representation which combines geographical data with attributive data. In a basic GIS the geographical data comprise information on the location of the agricultural machine and the attributive data includes for example time stamps, sensor data, yield map data, the working width data of the harvesting equipment, machine operator identifiers, parameters regarding the weather conditions or any other field work related data. In one realization of a GIS, a time line is included as described for example in EP-A 1 647 938. With the aid of a GIS the data used for monitoring the amount of product harvested is represented in a clear and instructive way in order to aid farmers cultivating their fields in a simpler and more precise way.

According to the invention a computer program for performing the method previously explained, when executing the computer program on a computer. The computer program is preferably stored on a machine readable storage medium or on a removable CD-ROM, flash memory, DVD or USB-stick. Additionally or alternatively, the computer program is provided on a server to be downloaded via for example a data network such as the internet or another transfer system such as the phone line or a wireless transfer connection.

According to the invention an agricultural machine including harvesting equipment is proposed, which comprises a positioning system providing positional data including information on the location of the agricultural machine, and one or more sensors providing sensor data including information on a state of a harvesting equipment, wherein the positioning system and the one or more sensors are in communication with a processing unit for calculating the amount of product harvested based on the positional data, the sensor data and a predetermined yield map provided by memory means. Furthermore, the agricultural machine encompasses the necessary elements for harvesting, which are known in the art.

Preferably, the agricultural machine comprises the components described in the context of the method according to the invention in order to be capable of performing the same. An agricultural machine of this type is particularly advantageous, since it allows monitoring the harvesting operation performed with the agricultural machine in a simple and precise way. Furthermore, the machine is applicable to harvesting any type of crop. In this regard, it is particularly useful, if the machine comprises a mobile or semi mobile part and a de-/attachable harvesting equipment that can be exchanged depending on the crop to be harvested.

Furthermore, the sensor data comprises information on a state of the equipment, wherein the state of the equipment includes information whether the equipment is active, i.e. engaged and/or running, and whether product is flowing through the equipment.

In one embodiment, the processing unit for calculating the amount of product harvested and the memory means storing the yield map are located on the agricultural machine or in an remote station. In another embodiment, the processing unit for calculating the amount of product harvested communicates with the positioning system and the one or more sensors via bi-directional, real time telematics.

In yet another embodiment, the processing unit for calculating the amount of product harvested is connected to the positioning system and the one or more sensors through a wired or wireless connection. In one implementation, the machine comprises at least one output medium to provide the calculated amount of product harvested and/or memory means to store the calculated amount of product harvested.

### DRAWINGS

Further advantages, characteristics and details of the invention are presented on the basis of exemplary embodiments, which are described below with reference to the drawings.

It is shown in:
- Fig. 1: a schematic diagram of an agricultural machine on a field to be cultivated,
- Fig. 2: the functional components of an agricultural machine and a station adapted to perform the method according to the present invention in a centralized scheme,
- Fig. 3: the functional components of an agricultural machine and a station adapted to perform the method according to the present invention in a decentralized scheme,
- Fig. 4: a flow chart indicating the interactions of the components shown in figures 2 and 3.

### EMBODIMENTS

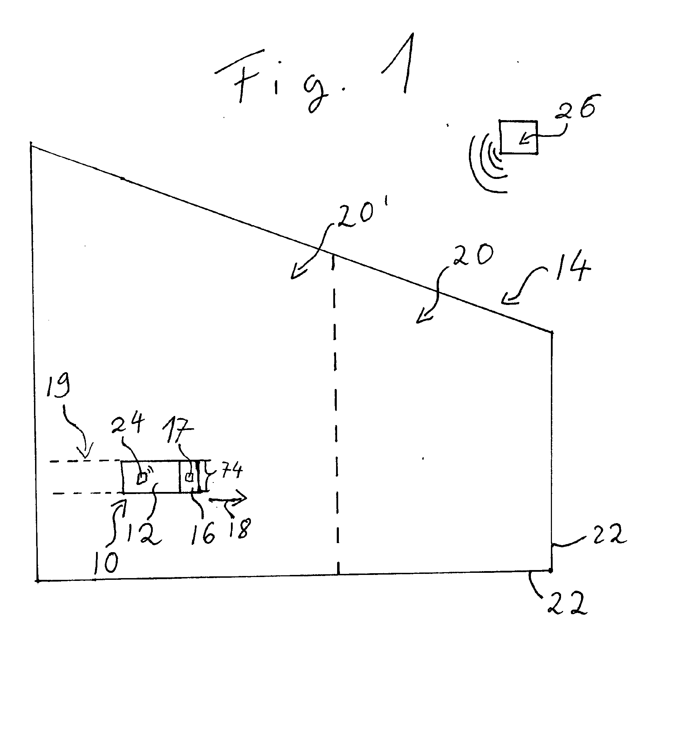

Figure 1 schematically illustrates an agricultural machine 10 comprising e.g. a tractor 12 in a typical situation on a field plot 14 during cultivation. The field plot 14 is defined by borders 22 and contains patches 20, 20', which simply host one kind of crop or alternatively host different kinds of crop on each field patch 20, 20'. Thus, depending on the location of the agricultural machine 10 in the field plot 14 different amounts of crop and different kinds of crop are to be harvested. The information on the crop type and its yield is predetermined either by sensing the field plot 14 prior to harvesting or by remote sensing through spectral images of the field plot 14. Such information is mapped in a yield map, which is provided prior to the harvesting operation.

In the illustration of figure 1 the agricultural machine 10 is armed with harvesting equipment 16 and performs the harvesting operation where the ripened crop is gathered. In such a situation, the agricultural machine 10 moves along the field plot 14 such as indicated by arrow 18. Thus, the agricultural machine 10 harvests along a path 19, wherein the length of the path 19 is determined by the trajectory of the agricultural machine 10 in a certain time frame and the width is determined by the working width 74 of the harvesting equipment 16.

Furthermore, the state of the harvesting equipment is continuously monitored by sensors 17 while the agricultural machine 10 is in operation. Furthermore, the agricultural machine 10 comprises a GPS-receiver 24, in communication with a GPS-satellite 26 or another positioning system for continuously tracking the location of the machine 10 on the field plot 14. While the agricultural machine 10 is in operation its position on the field plot 14 and the state of the harvesting equipment 16 are continuously monitored. According to the present invention this data in combination with the yield map are utilized to precisely calculate the amount of product harvested in real time.

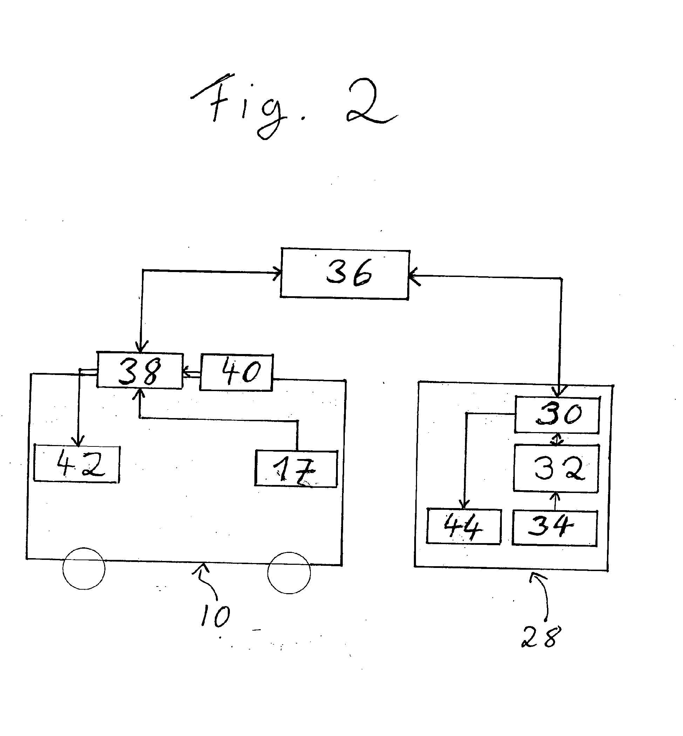

Figure 2 shows the functional components located on the agricultural machine 10 and in a remote station 28 in order to calculate the amount of product harvested. The embodiment of figure 2 illustrates the arrangement of components in a centralized scheme, wherein the computer 30 processing the data is located in a remote station 28. Memory means 32 are assigned to the computer 30, such that the computer 30 can access the data stored in the memory means 32. Prior to starting the harvesting operation, the memory means 32 are fed with a predetermined yield map 34. This way the computer 30 can access the information on the predetermined yield map 34 stored in the memory means 32 at any time during harvesting operations.

Furthermore, the computer 30 is in communication with the components situated on the agricultural machine 10 via a real time telematics 36, wherein the telecommunication is provided through a mobile phone wireless network. A wireless network interface 38 is situated on the agricultural machine 10. Through this interface 38 the positional data from the positioning system 40 as well as sensor data from the activity sensor 17 are continuously transferred to the remote station 28 during operation of the agricultural machine 10. This way positional data and the sensor data are provided to the computer 30, which with further aid of the predetermined yield map 34 stored in the memory 32 calculates the amount of the product harvested in real time.

In particular, if the agricultural machine 10 resides within the plot and the harvesting equipment 16 is active and product is flowing, the computer 30 calculates the length of the path 19 harvested from the positional data provided by the positioning system 40, which includes the location of the agricultural machine 10 on the field plot 14 and a time stamp associated with this location. The length of the path 19 harvested times the predefined working width 74 of the machine 10, times the estimated yield stored in the yield map of memory 32 gives the amount of product harvested in a specific time frame along a specific path. The harvest status, i.e. the amount of product harvested in specific time frames and/or at specific locations, is stored in the memory means 32 and displayed on a screen or display. The harvest status is further transferred through real time telematics 36 to the machine 10. Here, the harvest status is transferred from the computer 30 via the network 36 to the data interface 38, which then provides the harvest status to a display 42.

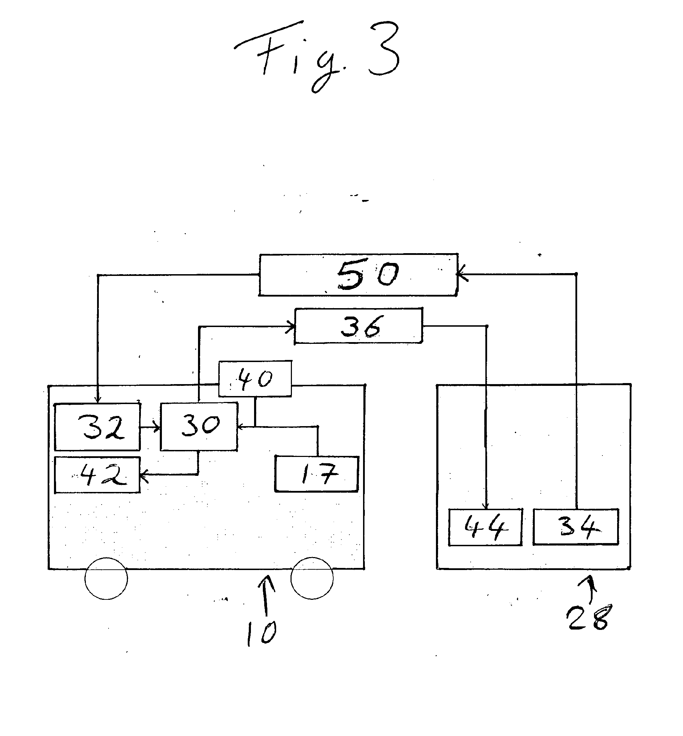

Figure 3 shows the functional components adapted to perform the method for monitoring the amount of product harvested in a decentralized scheme. In contrast to figure 2, in this embodiment the computer 30 and the yield map memory 32 are situated on the agricultural machine 10 together with the positioning system 40, the activity sensor 17, and the display 42. Furthermore, a data transfer system 36 such as a network or a portable data storage device or a user interface allows transferring data on the harvest status 46 to the remote station 28 and a display 44.

Prior to starting the harvesting operation, the predetermined yield map 34 is fed to the memory means 32 via the data transfer system 50 such as mobile phone network or data storage devices or a user interface. The predetermined yield map 34 is saved in memory means 32 located on the agricultural machine 10. This way the computer 30 can access the predetermined yield map 34 at any time.

Furthermore, the computer 30 can firstly communicate with the positioning system 40 and the activity sensor 17 located on the agricultural machine 10. Both, the data from the positioning system 40 and the activity sensor 17 are continuously provided to the computer 30. This way, the computer 30 can firstly compare the data from the positioning system 40 to the plot coordinates stored in the memory 32. In case the positioning system 40 provides positional data, which indicate that the agricultural machine 10 has left the predefined borders of the field plot 14 and the equipment 16 is active, the computer 30 sends out a warning signal to the operator or stops the machine.

In the station 28 the harvest status 46 is provided through network 36 either to means fixed in the station 28 or some type mobile unit such as a mobile phone of a supervisor administrating the field work. Furthermore, the station 28 includes the predetermined yield map 34 in order to e.g. check with the monitored data.

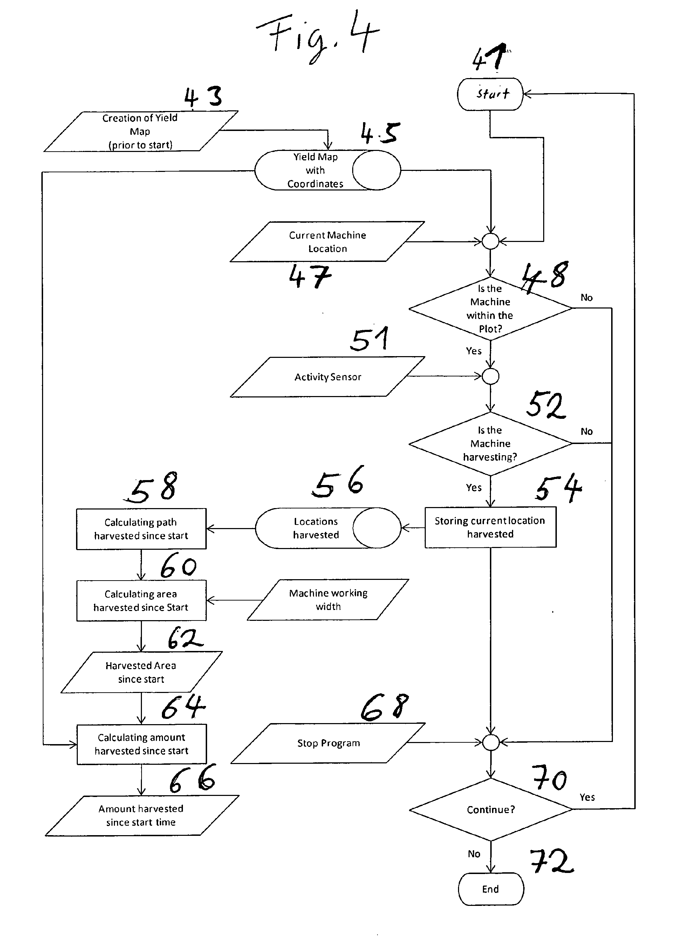

Figure 4 shows a flow chart illustrating the interaction between the components shown in figures 2 and 3. The flow chart of figure 4 starts with the steps 41, 43, 45 and 47. In step 41 the operation of the agricultural machine 10 is started. Furthermore, a yield map is created and stored with the coordinates of the field plot 14 in steps 43 and 45. This information is accessible by the computer 30 performing the monitoring method according to the present invention.

After the agricultural machine 10 is started, the current machine location is continuously provided to the computer 30 through positional data by a positioning system 40 in step 47. Then the processing unit 30 checks 48 on the basis of the positional data and the coordinates of the field plot 14, which is part of the predetermined yield map 34, whether the machine 10 is within the field plot 14.

If the machine 10 is within the field plot 14, the activity sensor 17 is checked in a next step 51 and gives information on the status of the harvesting equipment 16. If the machine 10 is not within the plot 14, the previous step 48 is repeated until the machine 10 reenters the plot 14 and/or the machine is deactivated and warnings are sent out.

In case the machine is harvesting 52 within the right plot 14, every current location during the harvesting operation is stored 54, 56 and used to calculate 58 the path 19 harvested since the start of the operation 41, wherein the first location provided by the positioning system 40 is used as a starting point. Via the calculated path 19 the area harvested 62 is calculated 60 by including the machine working width 74. In general, the machine working width 74 may be implemented as a fixed variable depending on the machine 10 used. In step 60, the area harvested since the start 40 is calculated. By including the yield map with coordinates and the area harvested the amount of product harvested since the start is calculated in step 64. In the next step 66, the harvest status 44-46 is provided, which is transferred to the station 28 or some type of screen or display 42 located on the agricultural machine 10 in order to notify the machine operator. When the harvesting operation is stopped and the machine 10 is shut down the program will be stopped through steps 68 to step 72 of figure 4.

The method for monitoring agricultural work according to the present invention allows monitoring the work of an agricultural machine 10 by using positional data and sensor data from the equipment 16 in order to determine whether the work is performed in the right field plot14 and how much crop has been harvested from this field plot 14. Of course, the method according to the present invention can yield further monitoring information based on a sensor 17 signaling the activity of the equipment 16 and the positional data. However, particularly determining the yield without having to measure the material through put of a harvester allows for simple and at the same time precise monitoring. In contrast to prior art, the method according to the present invention overcomes problems related to the physical throughput measuring devices by combining yield maps created shortly before harvest with the localization of harvesting activity. This way accurate and valuable harvest monitoring information can be obtained.

### Bezugszeichenliste

- 10: agricultural machine
- 12: tractor
- 14: field/plot
- 16: harvesting equipment
- 17: activity sensors
- 18: moving direction
- 19: harvest path
- 20, 20': patches, subplots
- 22: field borders
- 24: GPS-receiver
- 26: GPS-satellite
- 28: remote station
- 30: computer, processing unit
- 32: memory means
- 34: predetermined yield map
- 36: transfer system/telematics
- 38: interface
- 40: positioning system
- 41: start of system
- 42: display on machine
- 43: creation of yield map
- 44: display at station
- 45: predetermined yield map
- 46: harvest status
- 47: position data
- 48: check machine in the plot
- 50: transfer system
- 51: activity sensor data
- 52: check is machine harvesting
- 54: storing harvest location
- 56: data on locations harvested
- 58: calculation of harvest path
- 60: calculation of area harvested since start
- 62: data on area harvested
- 64: calculating amount of product harvested
- 66: amount of product harvested since start
- 68: stop program
- 72: end of program
- 74: working width

## Claims

1. Method for monitoring the amount of product harvested by an agricultural machine (10) including harvesting equipment (16) comprising the steps:
a) storing a predetermined yield map (45) in memory means (32) accessible by a processing unit (30),
b) continuously providing (47) positional data and sensor data (51) to the processing unit (30) while the agricultural machine (10) is in operation, wherein the positional data comprises information on a location of the agricultural machine (10) and the sensor data comprises information on a state of the harvesting equipment (16), and
c) calculating the amount of product harvested (64) based on the positional data, the sensor data and the predetermined yield map (45).

2. Method according to claim 1, wherein the predetermined yield map (45) is created by field sampling and/or remote sensing.

3. Method according to claims 1 or 2, wherein the yield map (45) comprises a historic yield map, a biomass map, a soil map, a soil moisture map, a field image or a combination of two or more of those.

4. Method according to one of the claims 1 to 3, wherein the processing unit (30) is assigned to the agricultural machine (10) or an remote station (28).

5. Method according to one of the claims 1 to 4, wherein the positional data is provided to the processing unit by a positioning system (40) that determines the location of the agricultural machine (10).

6. Method according to one of the claims 1 to 5, wherein the sensor data comprises information on the state of the equipment (16) of the agricultural machine (10) including whether the equipment (16) is active and whether product is flowing through the equipment (16).

7. Method according to any one of claims 5 and 6, wherein the positioning system (40) and the one or more sensor(s) (17) communicate with the processing unit (30) via bi-directional, real time telematics (36, 50).

8. Method according to one of the claims 1 to 7, wherein the calculated amount of product harvested is calculated (64), if the positional data indicates that the machine (10) is located in a predetermined field plot and if the sensor data indicates that the equipment (16) is active and that product is flowing.

9. Method according to one of the claims 1 to 8, wherein the calculated amount of product harvested is calculated (64) in real time.

10. Method according to one of the claims 1 to 9, wherein the calculated amount of product harvested (66) is provided to an output medium (42, 44), stored in memory means (32) or transferred to a remote station (28).

11. Computer program for performing the method of claims 1 to 10, when executing the computer program on a computer (30).

12. An agricultural machine (10) including harvesting equipment (16) comprising:
- a positioning system (40) providing positional data including information on the location of the agricultural machine (10), and
- one or more sensors (17) providing sensor data including information on a state of the harvesting equipment (16),
wherein the positioning system (40) and the one or more sensors (17) are in communication with a processing unit (30) for calculating the amount of product harvested (64) based on the positional data, the sensor data and a predetermined yield map (45) provided by memory means (32).

13. The agricultural machine (10) according to claim 12, wherein the processing unit (30) for calculating the amount of product harvested and the memory means (32) storing the yield map (45) are located on the agricultural machine (10) or in an remote station (28).

14. The agricultural machine (10) according to one of the claims 12 or 13, wherein the processing unit (30) for calculating the amount of product harvested (64) is connected to the positioning system (40) and the one or more sensors (17) through a wired or wireless connection.

15. The agricultural machine (10) according to one of the claims 12 to 14, wherein the machine (10) and/or the remote station (28) comprise at least one output medium (42, 44) to provide the calculated amount of product harvested (66) and/or memory means (32) to store the calculated amount of product harvested (66).
